# EUROPEAN PATENT APPLICATION

(11) **EP 4 487 932 A1**
(43) Date of publication of application: **08.01.2025**
(21) Application number: 23789215.3
(22) Date of filing: 02.06.2023
(51) Int. Cl.: B01D 1/14, B01D 1/18, B01D 1/20, B01J 2/04, B05B 7/10, F26B 1/00, B01J 2/02, F26B 3/14, F26B 25/00

(54) **SPRAYER, SPRAY DRYING DEVICE, SPRAY DRYING SYSTEM AND CONTROL METHOD THEREFOR**

(30) Priority: 19.05.2023 CN 202310568410
(71) Applicant: Contemporary Amperex Technology (Hong Kong) Limited, Central, Central And Western District (HK)
(72) Inventor: WU, Kai, Ningde, Fujian 352100 (CN); YAN, Haohao, Ningde, Fujian 352100 (CN); CAI, Jiancheng, Ningde, Fujian 352100 (CN); XU, Ganyu, Ningde, Fujian 352100 (CN); YU, Haohua, Ningde, Fujian 352100 (CN); CHEN, Guangsheng, Ningde, Fujian 352100 (CN)
(74) Representative: Frick, Robert
(86) International application number: PCT/CN2023/098098
(87) International publication number: WO 2024/239375

(57) **Abstract**

This application discloses a sprayer (10), a spray-drying apparatus (100), and a spray-drying system (400) and a control method therefor. The sprayer (10) includes a sprayer body (11). The sprayer body (11) is provided with a liquid material inlet (12), a liquid material nozzle (13), a gas inlet (14), a gas nozzle (15), a liquid material channel (16), and a gas channel (17). The liquid material nozzle (13) and the liquid material inlet (12) both communicate with the liquid material channel (16), the gas nozzle (15) and the gas inlet (14) both communicate with the gas channel (17), and the gas nozzle (15) is provided at the liquid material nozzle (13). A dispersing member (20) is provided in the liquid material channel (16), the dispersing member (20) is disposed at the liquid material nozzle (13), and the dispersing member (20) divides the liquid material channel (16) into multiple sub-channels (160) communicating with the liquid material nozzle (13). Granular powder materials produced using such sprayer (10) can have a particle size meeting the specification requirements.

## Description

This application claims priority to Chinese Patent Application No. 202310568410.5, filed with the China National Intellectual Property Administration on May 19, 2023 and entitled "SPRAYER, SPRAY-DRYING APPARATUS, AND SPRAY-DRYING SYSTEM AND CONTROL METHOD THEREFOR", which is incorporated herein by reference in its entirety.

### TECHNICAL FIELD

This application relates to the field of spray granulation technologies, and specifically to a sprayer, a spray-drying apparatus, and a spray-drying system and a control method therefor.

### BACKGROUND

Spray granulation is a granulation method by which a powder slurry or solution is sprayed into a granulation tower, and then the powder slurry or solution is dried and agglomerated under the action of hot spray air to obtain spherical granules. This method is widely used for producing catalysts of various particle sizes or other particles having requirements on particle size. During spray granulation drying production, final materials produced are different in particle size.

In the related art, spray-drying apparatuses generally perform granulation through centrifugal atomization drying. To be specific, with high-speed rotation of an atomization disc, a slurry with a solid content of 5% to 50% is thrown out of the atomization disc at a high speed to form micro liquid droplets; and at this point, clean air heated by a heater completes heat exchange in a primary spray tower, thereby implementing material drying and granulation. Since the particle size of a granular powder material produced using such granulation method is mainly affected by the rotating speed of the atomization disc, it is impossible to produce small-particle-size granular powder materials.

### SUMMARY

An objective of embodiments of this application is to provide a sprayer, a spray-drying apparatus, and a spray-drying system and a control method therefor, including but not limited to solving the problem of inability to produce small-particle-size granular powder materials.

Embodiments of this application adopt the following technical solutions.

According to a first aspect, an embodiment of this application provides a sprayer including a sprayer body, the sprayer body being provided with a liquid material inlet, a liquid material nozzle, a gas inlet, a gas nozzle, a liquid material channel, and a gas channel, where the liquid material nozzle and the liquid material inlet both communicate with the liquid material channel, the gas nozzle and the gas inlet both communicate with the gas channel, and the gas nozzle is provided at the liquid material nozzle.

In the technical solution of this embodiment of this application, the liquid material nozzle and the liquid material inlet both communicate with the liquid material channel, the gas nozzle and the gas inlet both communicate with the gas channel, and the gas nozzle is provided at the liquid material nozzle. In this way, a liquid material sprayed out of the liquid material nozzle and gas sprayed out of the gas nozzle are shear-mixed at the liquid material nozzle, such that the liquid material is physically fragmented and atomized by the gas to form micro mist droplets. The micro mist droplet forms a spherical shape under the action of surface tension; and in addition, due to a quite large surface area of the mist droplet, moisture is quickly evaporated and dried under the action of hot gas flow, finally resulting in a dry spherical granular powder material with a small diameter through shrinkage.

In some embodiments, a dispersing member is provided in the liquid material channel, the dispersing member is disposed at the liquid material nozzle, and the dispersing member divides the liquid material channel into multiple sub-channels communicating with the liquid material nozzle.

In the sprayer according to these embodiments of this application, when flowing through the dispersing member, the liquid material is cut by the dispersing member, facilitating formation of smaller mist droplets at the liquid material nozzle.

In some embodiments, multiple sub-channels are formed between an outer surface of the dispersing member and an inner wall of the liquid material channel.

Thus, in the sprayer according to these embodiments of this application, when flowing through the dispersing member, the liquid material flows into the liquid material nozzle via the multiple sub-channels, such that the liquid material is dispersed in the liquid material channel, facilitating formation of smaller mist droplets at the liquid material nozzle.

In some embodiments, the dispersing member includes a prismatic segment, and the sub-channel is formed between each side wall of the prismatic segment and the inner wall of the liquid material channel.

Thus, in the sprayer according to these embodiments of this application, when flowing through the dispersing member, the liquid material is cut by a side ridge between two adjacent side walls of the dispersing member, facilitating formation of smaller mist droplets at the liquid material nozzle.

In some embodiments, the prismatic segment includes a first prismatic segment and a second prismatic segment connected to each other, where a cross section of the first prismatic segment has a larger circumcircle radius than a cross section of the second prismatic segment, and the first prismatic segment is located on a side of the second prismatic segment facing toward the liquid material nozzle.

Thus, in the sprayer according to these embodiments of this application, a flow velocity of the liquid material in the liquid material channel is changed and the liquid material is sprayed out of the liquid material nozzle at a specified angle, facilitating formation of smaller mist droplets at the liquid material nozzle.

In some embodiments, a nozzle member is provided at the liquid material nozzle, the nozzle member is located on a side of the dispersing member facing toward the liquid material nozzle, and a periphery of the nozzle member is hermetically connected to the inner wall of the liquid material channel; and the nozzle member is provided with a spray orifice, and the spray orifice communicates with each of the sub-channels.

In the sprayer according to these embodiments of this application, the liquid material is sprayed out of the spray orifice at a high speed, increasing the speed of the liquid material being sprayed out of the liquid material nozzle, thereby facilitating formation of smaller mist droplets.

In some embodiments, the dispersing member is in clearance fit with the inner wall of the liquid material channel, and the dispersing member includes an abutting column segment, where the abutting column segment is located on a side of the prismatic segment facing toward the nozzle member, a side wall of the abutting column segment is provided with multiple communicating grooves, and each of the communicating grooves communicates with the spray orifice and at least one of the sub-channels.

In the sprayer according to these embodiments of this application, when flowing through the dispersing member, the liquid material is cut and dispersed by the communicating grooves, facilitating formation of smaller mist droplets at the liquid material nozzle.

In some embodiments, the communicating groove is oblique to an axial direction of the abutting column segment.

In the sprayer according to these embodiments of this application, a flowing direction of the liquid material in the liquid material channel is changed, such that whirling vortexes are formed, thereby helping the liquid material to be cut and dispersed.

In some embodiments, the spray orifice includes a taper hole segment and a column hole segment, where the column hole segment is connected to a small-opening end of the taper hole segment, and a large-opening end of the taper hole segment is capable of allowing the abutting column segment to extend into; and an end of the communicating groove runs through an end of the abutting column segment facing toward the nozzle member and communicates with the taper hole segment.

In the sprayer according to these embodiments of this application, gas is spirally sprayed out of the spray orifice at a high speed, changing the flowing direction of the liquid material, thereby helping the liquid material to be cut and dispersed by air.

In some embodiments, the nozzle member is in interference fit with the liquid material channel.

Thus, in the sprayer according to these embodiments of this application, the possibility of the nozzle member being sprayed out of the liquid material nozzle is reduced.

In some embodiments, a limiting portion is provided on one side of the nozzle member away from the dispersing member, where the limiting portion is configured to prevent the nozzle member from moving out of the liquid material nozzle.

Thus, in the sprayer according to these embodiments of this application, the possibility of the nozzle member being sprayed out of the liquid material nozzle is reduced.

In some embodiments, the limiting portion is an annular flange provided at one end of the liquid material channel, a diameter of a center hole of the annular flange is smaller than a maximum diameter of the nozzle member, and the center hole of the annular flange is the liquid material nozzle.

In the sprayer according to these embodiments of this application, with a supporting member, the possibility of the nozzle member being sprayed out of the liquid material nozzle is reduced and the diameter of the liquid material nozzle is reduced as well, thereby helping to obtain a granular material with a smaller particle size.

In some embodiments, the sprayer body includes an outer pipe and an inner pipe running through the outer pipe, a pipe chamber of the inner pipe is the liquid material channel, and space between the inner pipe and the outer pipe is the gas channel; and the liquid material nozzle is a pipe opening of the inner pipe at one end, the liquid material nozzle is located at a pipe opening of the outer pipe at one end, and the gas nozzle is disposed around the liquid material nozzle.

In the sprayer according to these embodiments of this application, the gas nozzle is disposed around the liquid material nozzle, such that the liquid material sprayed out of the liquid material nozzle is fully cut by gas sprayed out of the gas nozzle along all directions, thereby facilitating formation of smaller mist droplets.

In some embodiments, the inner pipe is externally sleeved with a sleeve, the sleeve is located at the end of the inner pipe where the liquid material nozzle is provided, a first end of the sleeve is hermetically connected to the outer pipe, a second end of the sleeve extends into the outer pipe and is hermetically connected to the inner pipe, and the gas nozzle is located at the first end of the sleeve and formed between the sleeve and the inner pipe; and multiple gas holes are provided on a circumferential wall of the sleeve in a circumferential direction, and the multiple gas holes all communicate with the liquid material channel and the gas channel.

In the sprayer according to these embodiments of this application, the multiple gas holes are provided on the circumferential wall of the sleeve in the circumferential direction and the multiple gas holes all communicate with the liquid material channel and the gas channel, enhancing disturbance of the liquid material in the liquid material channel during flowing, thereby helping the liquid material to be fully cut.

In some embodiments, each of the gas holes is an inclined hole, a hole axis of the gas hole and a central axis of the sleeve are non-uniplanar straight lines with respect to each other, and the multiple gas holes are spaced apart in the circumferential direction of the sleeve, all the gas holes having a same inclination direction.

Thus, in the sprayer according to these embodiments of this application, direction of the gas is changed, such that whirling vortexes are formed, helping the liquid material to be cut.

In some embodiments, an inclination angle of the hole axis of the gas hole with respect to the central axis of the sleeve ranges from 15° to 60°, where the inclination angle is an acute angle between the hole axis of the gas hole and a first normal, where the first normal refers to a normal at a position where a cylindrical surface on which a peripheral surface of the sleeve is located is intersected with the hole axis of the gas hole.

Thus, in the sprayer according to these embodiments of this application, the size and uniformity of the granular material can both be guaranteed.

In some embodiments, adjacent two of the gas holes have a same distance.

Thus, in the sprayer according to these embodiments of this application, the liquid material is uniformly cut by gas, facilitating uniformity of the granular material.

In some embodiments, the sleeve has an opening-shrinking pipe chamber, and the gas nozzle is located at the small-opening end of the pipe chamber.

Thus, in the sprayer according to these embodiments of this application, the gas spraying direction is changed, so that the liquid material can be cut better.

In some embodiments, the outer pipe includes an outer pipe body and an accommodating pipe, where one end of the accommodating pipe is detachably connected to the outer pipe body, the other end of the accommodating pipe is provided with a mounting hole, the first end of the sleeve adaptively extends into the mounting hole, and the second end of the sleeve extends into the accommodating pipe.

Thus, in the sprayer according to these embodiments of this application, reliability of a joint between the outer pipe and the sleeve can be improved.

In some embodiments, the inner pipe includes an inner pipe body and a nozzle pipe detachably connected to the inner pipe body, where the nozzle pipe is disposed in the accommodating pipe, a pipe opening of the nozzle pipe away from the inner pipe body is the liquid material nozzle, and the sleeve sleeves the nozzle pipe.

Thus, in the sprayer according to these embodiments of this application, it is convenient to mount, dismount, and overhaul the sprayer, and the strength of a joint between the sleeve and the nozzle pipe is enhanced.

In some embodiments, a circumferential wall of the inner pipe is provided with an annular connecting flange, the connecting flange including a fitting portion and a stop portion arranged in an axial direction of the inner pipe, where the stop portion has a larger diameter than the fitting portion, the fitting portion adaptively extends into a pipe opening of the sleeve at the second end, and the stop portion stops at an edge of the pipe opening of the sleeve at the second end.

Thus, in the sprayer according to these embodiments of this application, the inner pipe and the sleeve are connected firmly.

In some embodiments, a supporting member is provided in the outer pipe body, where the supporting member is disposed at an end portion of the outer pipe body and supported between the outer pipe body and the inner pipe.

In the sprayer according to these embodiments of this application, the provision of the supporting member enhances the strength of a joint between the outer pipe and the inner pipe, reducing deformation of the outer pipe, thereby facilitating improvement of reliability of the sprayer.

In some embodiments, the supporting member includes multiple supporting arms arranged in a circumferential direction of the inner pipe, and a space for air to pass through is formed between adjacent two of the supporting arms.

Thus, in the sprayer according to these embodiments of this application, the supporting member can achieve the purposes of connecting the inner pipe to the outer pipe and delivering air.

According to a second aspect, an embodiment of this application further provides a spray-drying apparatus including a drying chamber and the sprayer according to the embodiment of the first aspect, where the sprayer is mounted on a chamber wall of the drying chamber.

In the spray-drying apparatus according to this embodiment of this application, because the spray-drying apparatus includes the sprayer according to the first aspect, the spray-drying apparatus also has the corresponding technical effects of the foregoing sprayer, which are not described herein again.

According to a third aspect, an embodiment of this application further provides a spray-drying system including a material supply system, a gas supply system, and the spray-drying apparatus in the embodiment according to the second aspect, where the material supply system communicates with the liquid material inlet of the sprayer, and the gas supply system communicates with the gas inlet of the sprayer.

In the spray-drying system according to this embodiment of this application, because the spray-drying system includes the spray-drying apparatus according to the second aspect, the spray-drying system also has the corresponding technical effects of the foregoing spray-drying apparatus, which are not described herein again.

In some embodiments, the material supply system includes a material supply line, a material storage apparatus, and a water storage apparatus. One end of the material supply line communicates with the material storage apparatus and the other end communicates with the liquid material inlet of the sprayer, the material supply line is provided with a delivery pump and a first control valve, and the first control valve is disposed between the delivery pump and the material storage apparatus. The water storage apparatus is connected to the material supply line through a water supply line, the water supply line being connected between the delivery pump and the first control valve, and the water supply line being provided with a second control valve.

In the spray-drying system according to these embodiments of this application, the liquid material and water are delivered via one material supply line. In this way, the first control valve can be controlled to implement supply and stop of the liquid material; and in addition, the first control valve and the second control valve can be controlled to switch, such that water is delivered into the liquid material channel of the sprayer, thereby washing the liquid material channel, or the liquid material is delivered into the liquid material channel of the sprayer, thereby implementing spray granulation. Material supply and washing are implemented via one material supply line, not only reducing the refitting cost and facilitating market promotion, but also omitting a process of dismounting the sprayer for washing, thereby reducing the labor cost.

In some embodiments, the gas supply system includes a first gas supply line and a second gas supply line, where the first gas supply line communicates with the gas inlet, the second gas supply line communicates with the liquid material inlet, and the second gas supply line is provided with a third control valve.

In the spray-drying system according to these embodiments of this application, the third control valve can be controlled to open and close, so as to implement switching between delivery of gas into the liquid material channel of the sprayer to remove residues such as the liquid material and water in the liquid material channel, and delivery of the gas into the gas channel.

In some embodiments, the delivery pump includes a plunger pump and a diaphragm pump, the diaphragm pump being disposed between the first control valve and the plunger pump.

In the spray-drying system according to these embodiments of this application, the plunger pump produces a relatively high pressure, such that the liquid material is pumped at a certain pressure via the diaphragm pump in the material supply line and delivered into the liquid material channel of the sprayer.

In some embodiments, the material supply line is further provided with a pulsation damper and/or a back pressure valve, the pulsation damper being disposed at an outlet side of the plunger pump, and the back pressure valve being disposed at the outlet side of the plunger pump.

In the spray-drying system according to these embodiments of this application, a pressure at an outlet of the plunger pump can be regulated via the back pressure valve, such that a constant pressure is kept in the material supply line; and the provision of the pulsation damper not only reduces flow outputted by the plunger pump or influence on the pressure due to pulsation of the pressure, but also alleviates impact caused by flowing of the liquid material.

In some embodiments, an iron remover and/or a first filter is provided on the material supply line between the plunger pump and the diaphragm pump.

Thus, in the spray-drying system according to these embodiments of this application, impurities in the liquid material are reduced, thereby not only increasing purity of the liquid material but also reducing influence of the impurities in the liquid material on the plunger pump.

In some embodiments, an amount ratio of gas supplied from the first gas supply line to the sprayer to a material supplied from the material supply line to the sprayer ranges from 1 to 15.

Thus, in the spray-drying system according to these embodiments of this application, the size of the granular material and less gas use can both be guaranteed.

In some embodiments, a pressure ratio of the first gas supply line to the material supply line is 0.6:3.5.

Thus, in the spray-drying system according to these embodiments of this application, the size of the granular material and less gas use are both guaranteed.

In some embodiments, the spray-drying system further includes a drying system, the drying system including an air supply line, a heater, a first fan, and a second filter, where one end of the air supply line is connected to the second filter and the other end communicates with the drying chamber, and the first fan and the heater are disposed on the air supply line.

Thus, in the spray-drying system according to these embodiments of this application, after delivered into the drying chamber via the sprayer, the liquid material is shaped in one step in the drying chamber to form a granular material.

In some embodiments, the air supply line is further provided with a third filter, the third filter being disposed at an air outlet side of the heater.

In the spray-drying system according to these embodiments of this application, with the third filter provided, impurities in the air in the air supply line are filtered, thereby reducing influence of the impurities on the spray-drying apparatus.

In some embodiments, the second filter is a primary filter or a medium-efficiency filter, and the third filter is a high-efficiency filter.

In the spray-drying system according to these embodiments of this application, impurities formed in the heater when air is heated in the heater are filtered, thereby reducing influence of the impurities on the spray-drying apparatus.

According to a fourth aspect, an embodiment of this application further provides a control method for spray-drying system. The control method includes: after a liquid material is dried and granulated in a spray-drying apparatus, closing a first control valve and opening a second control valve such that a delivery pump delivers water in a water storage apparatus to a liquid material channel of a sprayer via a material supply line; and turning off the delivery pump after a preset time.

In the control method for spray-drying system according to this embodiment of this application, the control method for spray-drying system is intended to include the spray-drying apparatus according to the second aspect after the liquid material is dried and granulated by the spray-drying apparatus, and therefore the control method for spray-drying system also has the corresponding technical effects of the foregoing spray-drying apparatus, which are not described herein again.

In some embodiments, after the turning off the delivery pump, the control method further includes: opening the third control valve such that gas in the second gas supply line enters the liquid material channel of the sprayer.

Thus, in the control method for spray-drying system according to these embodiments of this application, gas can be delivered into the liquid material channel, such that residues such as the liquid material and water in the liquid material channel can be removed.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for the embodiments or demonstrative technical description. Apparently, the accompanying drawings in the following description show only some embodiments of this application, and persons of ordinary skill in the art may still derive other drawings from these accompanying drawings without creative efforts.
FIG. 1 is a schematic structural diagram of a sprayer according to some embodiments of this application;
FIG. 2 is a cross-sectional view of A-A in FIG. 1;
FIG. 3 is an enlarged view of a partial structure of a liquid material nozzle in FIG. 2;
FIG. 4 is a schematic structural diagram of a dispersing member according to some embodiments of this application from one perspective;
FIG. 5 is a schematic structural diagram of a dispersing member according to some embodiments of this application from another perspective;
FIG. 6 is an exploded view of the sprayer in FIG. 1;
FIG. 7 is a cross-sectional view of a nozzle member in FIG. 2;
FIG. 8 is a schematic structural diagram of the sprayer in FIG. 1 from one perspective;
FIG. 9 is a cross-sectional view of B-B in FIG. 8;
FIG. 10 is a cross-sectional view of C-C in FIG. 8;
FIG. 11 is a schematic structural diagram of a spray-drying system according to some embodiments of this application;
FIG. 12 is a schematic diagram of joints between a spray-drying apparatus and a material supply system, a gas supply system, and a drying system in FIG. 11;
FIG. 13 is a schematic structural diagram of a material supply system in FIG. 11;
FIG. 14 is a schematic structural diagram of a drying system in FIG. 11; and
FIG. 15 is a schematic structural diagram of a dust removal system in FIG. 11.

### DESCRIPTION OF EMBODIMENTS

The embodiments of this application are described in detail below. Examples of the embodiments are shown in the accompanying drawings 1 to 15, and reference signs that are the same or similar always indicate the same or similar components or components with the same or similar functions. The embodiments described below with reference to the accompanying drawings 1 to 15 are illustrative and merely for explaining this application. They should not be construed as limitations on this application.

In the description of this application, it should be understood that the orientations or positional relationships indicated by the terms "length", "width", "upper", "lower", "front", "rear", "left", "right", " perpendicular", "horizontal", "top", "bottom", "inside", "outside", and the like are based on the orientations or positional relationships as shown in the accompanying drawings. These terms are merely for the ease and brevity of description of the embodiments of this application rather than indicating or implying that the means or components mentioned must have specific orientations or must be constructed or manipulated according to specific orientations, and therefore shall not be construed as any limitation on the embodiments of this application.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the description of this application, "multiple" means two or at least two unless otherwise specifically stated.

In this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of this application, the term "and/or" is only an associative relationship for describing associated objects, indicating that three relationships may be present. For example, A and/or B may indicate the following three cases: presence of only A, presence of both A and B, and presence of only B.

It should be further noted that in the embodiments of this application, the same constituent parts or same components and materials are represented by the same reference sign; for the same components and materials in the embodiments of this application, only one component or material is marked with a reference sign in the figure as an example; and it should be understood that the reference sign is also applicable to other same components or materials.

In this application, the terms "an embodiment", "some embodiments", "an example", "a specific example", or "some examples", "a possible design", and the like mean that a specific feature, structure, material or characteristic described with reference to the embodiment or example is included in at least one embodiment or example of this application. In this specification, the illustrative expressions of these terms do not necessarily refer to the same embodiment or example. In addition, the specific feature, structure, material, or characteristic described can be combined in any appropriate manner in any one or more embodiments or examples. Besides, without mutual conflict, persons skilled in the art can incorporate and combine different embodiments or examples and features of the different embodiments or examples described in this specification.

Granulation is a quite important process during PTC thermal sensitive ceramic sheet production, and the quality of granular powder materials (granular materials for short) directly affects the appearance and mechanical performance of the PTC ceramic sheet and resistance-temperature characteristics of an ebullated drier. Granulation refers to a process in which a specified amount of binder is added into a fine-grained powder material, and then the binder and powder material are blended to uniformity to form a granular powder material. Such powder material has good fluidity and calenderability, and a sheet that has good strength and is less prone to delamination and cracking can be obtained in a sheet pressing process.

Spray-drying methods are used for granulation in industrial production, and the fundamental principle of the methods is that a powder material with a binder is sprayed into a granulation tower (also referred to as a drying tower) via a sprayer and atomized, the drying tower includes a drying chamber, and mist droplets in the drying chamber are dried by hot gas flow in the drying chamber to form granular powder that is then discharged from the bottom of the drying chamber.

In the related art, spray-drying apparatuses generally perform granulation through centrifugal atomization drying. To be specific, with high-speed rotation of an atomization disc, a slurry with a solid content of 5% to 50% is thrown out of the atomization disc at a high speed to form micro liquid droplets; and at this point, clean air heated by a heater completes heat exchange in a primary spray tower, thereby implementing material drying and granulation. As mainly affected by the rotating speed of the atomization disc, the particle size of a granular powder material produced using such granulation method cannot meet the specification requirements.

In view of this, an embodiment of this application provides a sprayer, in which a sprayer body is provided with a liquid material inlet, a liquid material nozzle, a gas inlet, a gas nozzle, a liquid material channel, and a gas channel, where the liquid material nozzle and the liquid material inlet both communicate with the liquid material channel, the gas nozzle and the gas inlet both communicate with the gas channel, and the gas nozzle is provided at the liquid material nozzle. In this way, a liquid material sprayed out of the liquid material nozzle and gas sprayed out of the gas nozzle are shear-mixed at the liquid material nozzle, such that the liquid material is physically fragmented and atomized by the gas to form micro mist droplets. In a drying chamber, moisture is quickly evaporated and dried under the action of hot gas flow, and the micro mist droplets finally form a dry spherical granular material with a small diameter through shrinkage.

In a spray-drying system, the liquid material enters the drying chamber via the liquid material nozzle from the liquid material channel of the sprayer to start a spray granulation drying process that is specifically divided into three stages: liquid material atomization, mist particle granulation through drying, and granular powder material discharging. A spray-drying apparatus is a core apparatus of a spray-drying system.

The spray-drying apparatus includes a drying chamber; the sprayer is disposed on a chamber wall of the drying chamber; an outlet end of the sprayer is located in the drying chamber; and an inlet end of the sprayer is connected to a tail end of a material supply system. The sprayer, also referred to as a spray gun, is an important component that sprays a liquid material at a certain pressure into the drying chamber and that implements atomization drying in the drying chamber to form a spherical granular material.

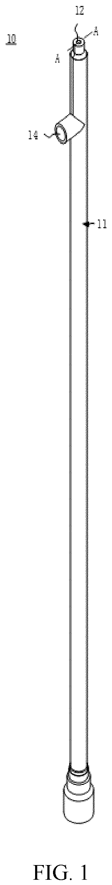

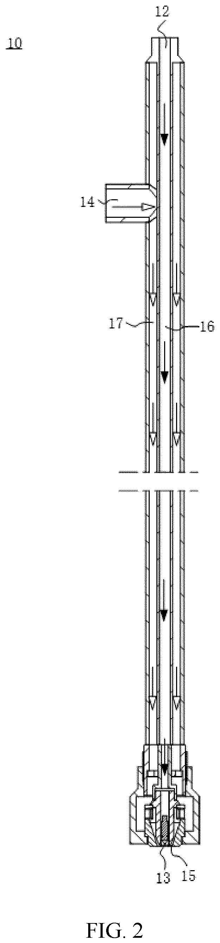

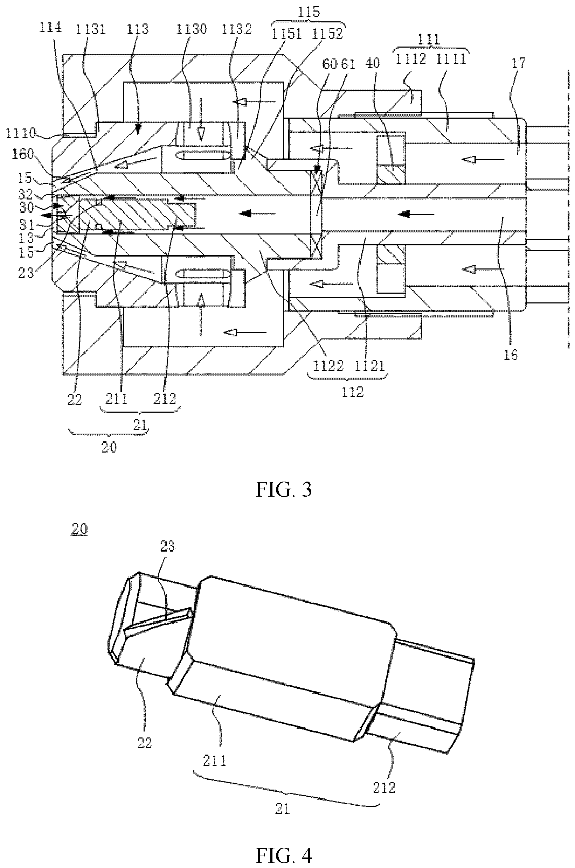

As shown in FIG. 1 to FIG. 4, FIG. 1 is a schematic structural diagram of a sprayer 10 according to some embodiments of this application; FIG. 2 is a cross-sectional view of A-A in FIG. 1; FIG. 3 is an enlarged view of a partial structure of a liquid material nozzle 13 in FIG. 2; and FIG. 4 is a schematic structural diagram of a dispersing member 20 according to some embodiments of this application from one perspective. An embodiment of this application provides a sprayer 10 including a sprayer body 11. The sprayer body 11 is provided with a liquid material inlet 12, a liquid material nozzle 13, a gas inlet 14, a gas nozzle 15, a liquid material channel 16, and a gas channel 17, where the liquid material nozzle 13 and the liquid material inlet 12 both communicate with the liquid material channel 16, the gas nozzle 15 and the gas inlet 14 both communicate with the gas channel 17, and the gas nozzle 15 is provided at the liquid material nozzle 13; and a dispersing member 20 is provided in the liquid material channel 16, the dispersing member 20 is disposed at the liquid material nozzle 13, and the dispersing member 20 divides the liquid material channel 16 into multiple sub-channels communicating with the liquid material nozzle 13.

In the sprayer 10 of this embodiment of this application, the liquid material nozzle 13 and the liquid material inlet 12 both communicate with the liquid material channel 16, the gas nozzle 15 and the gas inlet 14 both communicate with the gas channel 17, the gas nozzle 15 is provided at the liquid material nozzle 13, and the dispersing member 20 is provided in the liquid material channel 16. In this way, the liquid material channel 16 is divided into multiple sub-channels; when a flow material flows through the dispersing member 20 via the liquid material channel 16, the liquid material flows to the liquid material nozzle 13 via the sub-channels, so that the liquid material is dispersed in the liquid material channel 16 by the dispersing member 20, thereby enhancing disturbance of the liquid material during flowing and making the liquid material flow to the liquid material nozzle 13. Thus, the liquid material sprayed out of the liquid material nozzle 13 and gas sprayed out of the gas nozzle 15 are shear-mixed at the liquid material nozzle 13, such that the liquid material is physically fragmented and atomized by the gas to form micro mist droplets. The micro mist droplet forms a spherical shape under the action of surface tension; and in addition, due to a quite large surface area of the mist droplet, moisture is quickly evaporated and dried under the action of hot gas flow, finally resulting in a dry spherical granular powder material with a small diameter through shrinkage.

As shown in FIG. 3 and FIG. 4, in some embodiments, multiple sub-channels are formed between an outer surface of the dispersing member 20 and an inner wall of the liquid material channel 16.

Thus, with the above arrangement, when the liquid material flows through the dispersing member 20, part of the liquid material is obstructed by the dispersing member 20 and flows in another route into the liquid material nozzle 13 via the multiple sub-channels from the outer surface of the dispersing member 20; and after dispersed in the liquid material channel 16 by the dispersing member 20, the liquid material is cut by air at the liquid material nozzle 13, thereby facilitating formation of smaller mist droplets at the liquid material nozzle 13.

In addition to formation of the multiple sub-channels between the outer surface of the dispersing member 20 and the inner wall of the liquid material channel 16, it is also possible to design the dispersing member 20 as a grid structure so as to form multiple sub-channels in the dispersing member 20. Alternatively, it is also possible to design the dispersing member 20 as a grid structure based on the formation of the multiple sub-channels between the outer surface of the dispersing member 20 and the inner wall of the liquid material channel 16. In this way, both the inside and outer surface of the dispersing member 20 are provided with multiple sub-channels, which is more conducive to dispersion of the liquid material.

As shown in FIG. 4, in some embodiments, the dispersing member 20 includes a prismatic segment 21, and the sub-channel is formed between each side wall of the prismatic segment 21 and the inner wall of the liquid material channel 16.

Thus, with the above arrangement, in a section perpendicular to an axial direction of the sprayer body 11, the liquid material channel 16 is divided into multiple sub-channels in a circumferential direction, such that the liquid material achieves more uniform disturbance so as to be dispersed more uniformly by the dispersing member 20, facilitating formation of smaller mist droplets at the liquid material nozzle 13.

For example, the prismatic segment 21 may be a quadrilateral prism, a triangular prism, a pentagonal prism, or a polygonal prism. Certainly, in addition to including the prismatic segment 21, the dispersing member 20 may also be designed as a cylindrical structure. In this case, the inner wall of the liquid material channel 16 is formed by multiple planar side walls, and a joint between adjacent two of the planar side walls forms a sub-channel with the outer surface of the dispersing member 20, which is not specifically limited herein.

As shown in FIG. 3 to FIG. 5, FIG. 5 is an exploded view of the sprayer 10 in FIG. 1. In some embodiments, the prismatic segment 21 includes a first prismatic segment 211 and a second prismatic segment 212 connected to each other, where a cross section of the first prismatic segment 211 has a larger circumcircle radius than a cross section of the second prismatic segment 212, and the first prismatic segment 211 is located on a side of the second prismatic segment 212 facing toward the liquid material nozzle 13.

The above-mentioned cross section refers to a section perpendicular to the axial direction of the dispersing member 20.

The circumcircle means that in the above-mentioned cross section, the prismatic segment 21 has a polygonal outline, and a circle that is intersected with each vertex of the polygon is called a polygonal circumcircle.

With the above arrangement, in the section perpendicular to the axial direction of the sprayer body 11, the sub-channel located in the first prismatic segment 211 has a smaller size than the sub-channel located in the second prismatic segment 212. That is, when the liquid material flows from the second prismatic segment 212 to the first prismatic segment 211, space for the liquid material to pass through is smaller, and therefore the flow velocity of the liquid material in the liquid material channel 16 is changed, enhancing disturbance of the liquid material and allowing the liquid material to be sprayed out of the liquid material nozzle 13 at a certain angle, thereby facilitating formation of smaller mist droplets at the liquid material nozzle 13.

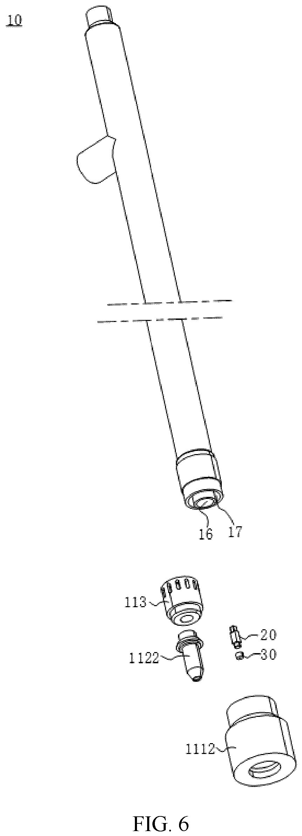

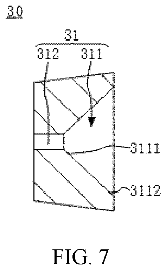

As shown in FIG. 3, FIG. 6, and FIG. 7, FIG. 6 is an exploded view of the sprayer 10 in FIG. 1; and FIG. 7 is a cross-sectional view of a nozzle member 30 in FIG. 2. In some embodiments, the nozzle member 30 is provided at the liquid material nozzle 13, the nozzle member 30 is located on a side of the dispersing member 20 facing toward the liquid material nozzle 13, and a periphery of the nozzle member 30 is hermetically connected to the inner wall of the liquid material channel 16; and the nozzle member 30 is provided with a spray orifice 31, and the spray orifice 31 communicates with each of the sub-channels.

The nozzle member 30 is provided on the side of the dispersing member 20 facing toward the liquid material nozzle 13, and the periphery of the nozzle member 30 is hermetically connected to the inner wall of the liquid material channel 16, such that the nozzle member 30 and the liquid material channel 16 are firmly connected. The nozzle member 30 is provided with the spray orifice 31, such that the liquid material is sprayed out of the spray orifice 31 at a high speed, increasing the speed of the liquid material being sprayed out of the liquid material nozzle 13, thereby facilitating formation of smaller mist droplets.

As shown in FIG. 3 to FIG. 5, in some embodiments, the dispersing member 20 is in clearance fit with the inner wall of the liquid material channel 16, and the dispersing member 20 includes an abutting column segment 22, where the abutting column segment 22 is located on a side of the prismatic segment 21 facing toward the nozzle member 30, a side wall of the abutting column segment 22 is provided with multiple communicating grooves 23, and each of the communicating grooves 23 communicates with the spray orifice 31 and at least one of the sub-channels. The dispersing member 20 is in clearance fit with the inner wall of the liquid material channel 16, and the side wall of the abutting column segment 22 is provided with the multiple communicating grooves 23, such that when the liquid material flows through the dispersing member 20, disturbance of the liquid material is enhanced; and in addition, the liquid material is cut and dispersed by the communicating grooves 23, facilitating formation of smaller mist droplets at the liquid material nozzle 13.

For example, the side wall of the abutting column segment 22 is provided with two communicating grooves 23. Certainly, the number and size of the communicating grooves 23 are determined with reference to the flow velocity of the liquid material, the particle size of the granular material, and the like, which are not specifically limited herein.

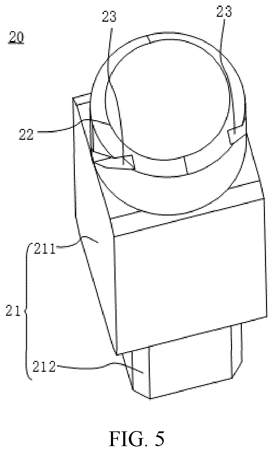

As shown in FIG. 4 and FIG. 5, in some embodiments, the communicating groove 23 is oblique to an axial direction of the abutting column segment 22.

The communicating groove 23 is oblique to the axial direction of the abutting column segment 22, such that a flowing direction of the liquid material in the liquid material channel 16 is changed, and thus whirling vortexes are formed at a communication point of the communicating groove 23 and the liquid material channel 16, thereby helping the liquid material to be cut and dispersed.

As shown in FIG. 3, in some embodiments, the spray orifice 31 includes a taper hole segment 311 and a column hole segment 312, where the column hole segment 312 is connected to a small-opening end 3111 of the taper hole segment 311, and a large-opening end 3112 of the taper hole segment 311 is capable of allowing the abutting column segment 22 to extend into; and an end of the communicating groove 23 runs through an end of the abutting column segment 22 facing toward the nozzle member 30 and communicates with the taper hole segment 311.

The small-opening end 3111 of the taper hole segment 311 refers to an end of a taper hole that has a smaller diameter, and the large-opening end 3112 of the taper hole segment 311 refers to an end of the taper hole that has a larger diameter.

The end of the communicating groove 23 runs through the end of the abutting column segment 22 facing toward the nozzle member 30 and communicates with the taper hole segment 311, such that the liquid material is spirally sprayed out of the spray orifice 3 1 via the spray orifice 31 at a high speed so as to be cut and dispersed by air.

As shown in FIG. 3 and FIG. 7, in some embodiments, the nozzle member 30 is in interference fit with the liquid material channel 16.

The interference fit refers to a fit having an interference (including a minimum interference equal to zero). That is, in the section perpendicular to the axial direction of the sprayer body 11, when an algebraic difference obtained by subtracting a size of the fitting liquid material channel 16 in each direction from a size of the nozzle member 30 in each direction is negative, the nozzle member 30 is in interference fit with the liquid material channel 16.

The nozzle member 30 is in interference fit with the liquid material channel 16, such that the nozzle member 30 and the liquid material channel 16 are firmly connected. In this way, when the liquid material flows to the liquid material nozzle 13 at a high speed, the possibility of the nozzle member 30 being sprayed out of the liquid material nozzle 13 with the liquid material is reduced, improving the reliability of the sprayer 10, thereby prolonging the service life of the sprayer 10.

As shown in FIG. 3, in some embodiments, a limiting portion 32 is provided on one side of the nozzle member 30 away from the dispersing member 20, where the limiting portion 32 is configured to prevent the nozzle member 30 from moving out of the liquid material nozzle 13.

The limiting portion 32 is provided to limit the nozzle member 30 within the liquid material nozzle 13 of the sprayer 10, reducing the possibility of the nozzle member 30 being sprayed out of the liquid material nozzle 13, thereby reducing the possibility of malfunction of a device caused if the nozzle member 30 is sprayed out of the liquid material nozzle 13.

As shown in FIG. 3, in some embodiments, the limiting portion 32 may be an annular flange provided at one end of the liquid material channel 16, a diameter of a center hole of the annular flange is smaller than a maximum diameter of the nozzle member 30, and the center hole of the annular flange is the liquid material nozzle 13.

The annular flange provided at one end of the liquid material channel 16 serves as the limiting portion 32. Thus, the limiting portion 32 reduces the possibility of preventing the nozzle member 30 from moving out of the liquid material nozzle 13, thereby reducing the risk of malfunction of the device. In addition, the diameter of the center hole of the annular flange is smaller than the maximum diameter of the nozzle member 30, reducing the diameter of the liquid material nozzle 13, thereby helping to obtain a granular material with a smaller particle size.

Certainly, in addition to that the limiting portion 32 may be an annular flange provided at one end of the liquid material channel 16, an annular component may also be provided at the liquid material nozzle 13 of the liquid material channel 16. The annular component may be connected to an end surface of the liquid material channel 16 close to the liquid material nozzle 13 through clamping, adhesion, or the like, to prevent the nozzle member 30 from moving out of the liquid material nozzle 13. This is not specifically limited herein.

As shown in FIG. 3, in some embodiments, the sprayer body 11 includes an outer pipe 111 and an inner pipe 112 running through the outer pipe 111, a pipe chamber of the inner pipe 112 is the liquid material channel 16, and space between the inner pipe 112 and the outer pipe 111 is the gas channel 17; and the liquid material nozzle 13 is a pipe opening of the inner pipe 112 at one end, the liquid material nozzle 13 is located at a pipe opening of the outer pipe 111 at one end, and the gas nozzle 15 is disposed around the liquid material nozzle 13.

The outer pipe 111 sleeves the inner pipe 112 to form the liquid material channel 16, the gas channel 17, the liquid material nozzle 13, and the gas nozzle 15, facilitating assembly. In addition, the gas nozzle 15 is disposed around the liquid material nozzle 13, such that the liquid material sprayed out of the liquid material nozzle 13 is fully cut along all directions by gas sprayed out of the gas nozzle 15, thereby facilitating formation of smaller mist droplets.

For example, an end of the outer pipe 111 close to the liquid material inlet 12 is hermetically connected to the space between it and the inner pipe 112, and an opening is provided in a pipe wall of the outer pipe 111. In this way, the liquid material inlet 12 and the gas inlet 14 are separated so as to be conveniently mounted together with and connected to the material supply line 210 and the gas supply line, such that the liquid material and air are respectively delivered to the sprayer 10, and the possibility of mutual influence between a liquid material delivery process and an air delivery process is reduced.

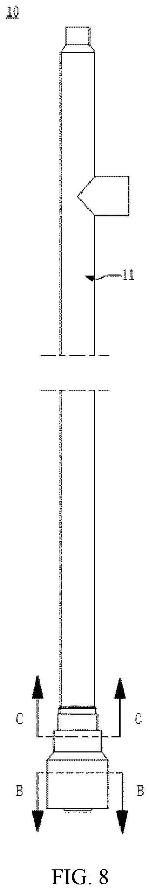

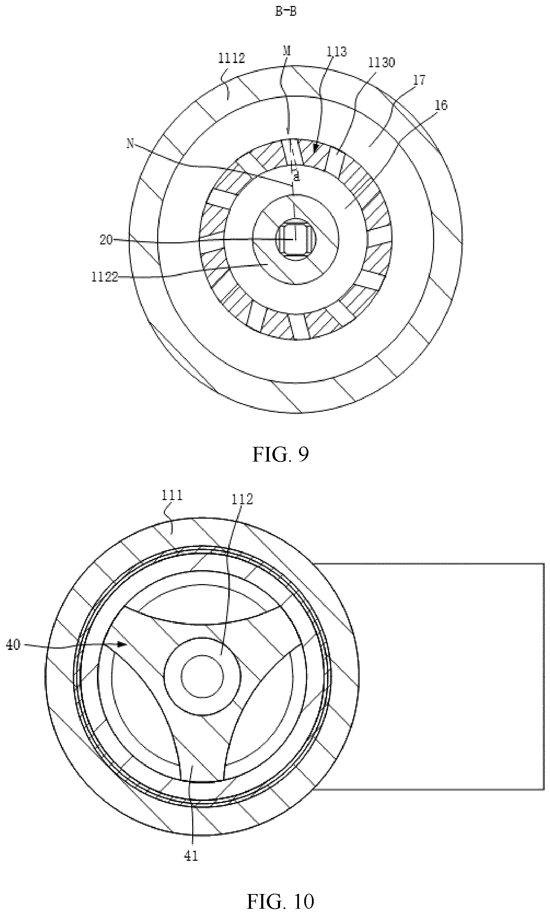

As shown in FIG. 3, FIG. 8, and FIG. 9, FIG. 8 is a schematic structural diagram of the sprayer 10 in FIG. 1 from one perspective; and FIG. 9 is a cross-sectional view of B-B in FIG. 8. In some embodiments, the inner pipe 112 is externally sleeved with a sleeve 113, the sleeve 113 is located at the end of the inner pipe 112 where the liquid material nozzle 13 is provided, a first end 1131 of the sleeve 113 is hermetically connected to the outer pipe 111, a second end 1132 of the sleeve 113 extends into the outer pipe 111 and is hermetically connected to the inner pipe 112, and the gas nozzle 15 is located at the first end 1131 of the sleeve 113 and formed between the sleeve 113 and the inner pipe 112; and multiple gas holes 1130 are provided on a circumferential wall of the sleeve 113 in a circumferential direction, and the multiple gas holes 1130 all communicate with the liquid material channel 16 and the gas channel 17.

The multiple gas holes 1130 are provided on the circumferential wall of the sleeve 113 in the circumferential direction and the multiple gas holes 1130 all communicate with the liquid material channel 16 and the gas channel 17. In this way, part of air in the gas channel 17 enters the liquid material channel 16 via the gas holes 1130, enhancing disturbance of the liquid material in the liquid material channel 16 during flowing; and the remaining part of the air is sprayed out of the gas nozzle 15 via the gas channel 17, thereby helping the liquid material to be fully cut.

As shown in FIG. 9, in some embodiments, each of the gas holes 1130 is an inclined hole, a hole axis of the gas hole 1130 and a central axis of the sleeve 113 are non-uniplanar straight lines with respect to each other, and the multiple gas holes 1130 are spaced apart in the circumferential direction of the sleeve 113, all the gas holes 1130 having a same inclination direction.

The non-uniplanar straight lines refer to two straight lines that are not in a same plane. The two straight lines that are in different planes are neither intersected nor parallel. That the hole axis of the gas hole 1130 and the central axis of the sleeve 113 are non-uniplanar straight lines with respect to each other means that the hole axis of each of the gas holes 1130 (dotted line M in a plane shown in FIG. 9) and the central axis of the sleeve 113 (perpendicular to the plane shown in FIG. 9, such as a central point of the sleeve 113 in FIG. 9) are neither intersected nor parallel.

The gas hole 1130 corresponding to the central axis indicated by the dotted line M in the plane shown in FIG. 9 is used as an example, one end of the central axis of the gas hole 1130 close to the central axis of the sleeve 113 is deviated toward a side with respect to the other end away from the central axis of the sleeve 113 (such as the central point of the sleeve 113 in FIG. 9); and the being inclined in a same direction means that the central axes of all of the multiple gas holes 1130 are deviated toward the same side.

Each of the gas holes 1130 is designed as an inclined hole, such that direction of the gas is changed, and part of air enters the liquid material channel 16 via the gas hole 1130 to form whirling vortexes at a communication point of the gas channel 17 and the liquid material channel 16, thereby enhancing the disturbance of the liquid material in the liquid material channel 16; the remaining part of air is cut by the liquid material via the gas channel 17, and the multiple gas holes 1130 are spaced apart in the circumferential direction of the sleeve 113, thereby allowing the liquid material to be dispersed more uniformly, and facilitating formation of a more uniform granular material.

As shown in FIG. 9, in some embodiments, an inclination angle a of the hole axis of the gas hole 1130 respect to the central axis of the sleeve 113 ranges from 15 degrees (°) to 60 degrees (°). The inclination angle of the gas hole 1130 refers to an inclination angle of the hole axis of the gas hole 1130 with respect to the central axis of the sleeve 113. That is, the inclination angle is an acute angle between the hole axis of the gas hole 1130 (dotted line M in the plane shown in FIG. 9) and a first normal (dotted line N in the plane shown in FIG. 9), where the first normal refers to a normal at a position where a cylindrical surface on which a peripheral surface of the sleeve 113 is located is intersected with the hole axis of the gas hole 1130.

The inclination angle is an important parameter in a design process of the sprayer 10. When the inclination angle is smaller than 15° or larger than 60°, less air in the gas channel 17 enters the liquid material channel 16, and no whirling vortex is formed; and in addition, the amount of gas sprayed out of the gas nozzle 15 is also reduced, resulting in incomplete cutting of the liquid material and unqualified particle size. When whirling vortexes are formed in the liquid material channel 16 due to increase in the amount of gas, the liquid material is fully cut, and the amount of gas sprayed out of the gas nozzle 15 is also increased, obtaining a smaller particle size but resulting in waste of air.

The inclination angle of the gas hole 1130 is designed within the foregoing range, such that the air in the gas channel 17 can form whirling vortexes in a joint between the gas hole 1130 and the liquid material channel 16, enhancing the disturbance of the liquid material; and in addition, the amount of gas at the gas nozzle 15 is sufficient for fully cutting the liquid material at the liquid material nozzle 13, so that a particle size formed meets the requirements, thereby guaranteeing both the particle size and less air use.

As shown in FIG. 9, in some embodiments, adjacent two of the gas holes 1130 have a same distance.

With the foregoing arrangement, the air uniformly enters the liquid material channel 16 via the multiple gas holes 1130, and the liquid material is uniformly cut by the air, thereby facilitating the uniformity of the granular material.

That adjacent two of the gas holes 1130 have a same distance includes that included angles formed by axes of adjacent two of the gas holes 1130 are totally the same, or the included angles formed by the axes of adjacent two of the gas holes 1130 are approximately equal within a specified range. This is not specifically limited herein.

As shown in FIG. 3, in some embodiments, the sleeve 113 has an opening-shrinking pipe chamber 114, and the gas nozzle 15 is located at the small-opening end of the pipe chamber 114.

The opening-shrinking mentioned above means that a chamber wall 51 of the pipe chamber 114 is inclined along the axial direction of the sleeve 113, such that the sleeve 113 is approximately in a funnel shape.

The gas nozzle 15 is disposed at the small-opening end of the opening-shrinking pipe chamber 114, such that the air gathers at the gas nozzle 15 along the chamber wall 51 of the pipe chamber 114, increasing the speed of the air being sprayed out; and in addition, this allows the air sprayed out of the gas nozzle 15 to be obliquely ejected from the four sides to the center of the liquid material nozzle 13, so that the liquid material is cut better to obtain a more uniform granular material, thereby facilitating formation of a smaller particle size.

As shown in FIG. 3, in some embodiments, the outer pipe 111 includes an outer pipe body 1111 and an accommodating pipe 1112, where one end of the accommodating pipe 1112 is detachably connected to the outer pipe body 1111, the other end of the accommodating pipe 1112 is provided with a mounting hole 1110, the first end 1131 of the sleeve 113 adaptively extends into the mounting hole 1110, and the second end 1132 of the sleeve 113 extends into the accommodating pipe 1112.

The foregoing arrangement helps to improve the reliability of the joint between the outer pipe 111 and the sleeve 113. In addition, the accommodating pipe 1112 is detachably connected to the outer pipe body 1111, facilitating mounting, dismounting, and overhauling of the outer pipe 111 and the sleeve 113 as well as replacement of the sleeve 113.

As shown in FIG. 3, in some embodiments, the inner pipe 112 includes an inner pipe body 1121 and a nozzle pipe 1122 detachably connected to the inner pipe body 1121, where the nozzle pipe 1122 is disposed in the accommodating pipe 1112, a pipe opening of the nozzle pipe 1122 away from the inner pipe body 1121 is the liquid material nozzle 13, and the sleeve 113 sleeves the nozzle pipe 1122.

The inner pipe body 1121 and the nozzle pipe 1122 are detachably connected, facilitating mounting, dismounting, overhauling, and replacement of the inner pipe 112 and the sleeve 113. In addition, the sleeve 113 sleeves the nozzle pipe 1122, enhancing the strength of the joint between the sleeve 113 and the nozzle pipe 1122, thereby improving the reliability of the sprayer 10.

The detachable connection includes clamping, screwing, and the like, which is not specifically limited herein.

As shown in FIG. 3, in some embodiments, a circumferential wall of the inner pipe 112 is provided with an annular connecting flange 115, the connecting flange 115 including a fitting portion 1151 and a stop portion 1152 arranged in an axial direction of the inner pipe 112, where the stop portion 1152 has a larger diameter than the fitting portion 1151, the fitting portion 1151 adaptively extends into a pipe opening of the sleeve 113 at the second end 1132, and the stop portion 1152 stops at an edge of the pipe opening of the sleeve 113 at the second end 1132.

With the foregoing arrangement, the connecting flange 115 is step-shaped; the fitting portion 1151 adaptively extends into the pipe opening of the sleeve 113 at the second end 1132, enhancing the connection strength of the inner pipe 112 and the sleeve 113; and the provision of the stop portion 1152 reduces movement of the sleeve 113 with respect to the inner pipe 112 along an axial direction of the outer pipe 111, so that the inner pipe 112 and the sleeve 113 are connected firmly.

As shown in FIG. 3, in some embodiments, a sealing member 60 is provided at a joint between the inner pipe body 1121 and the nozzle pipe 1122 in the axial direction of the inner pipe 112, where the sealing member 60 is provided with a through hole 61 for the liquid material channel 16 to pass through.

The provision of the sealing member 60 improves the sealing of the joint between the inner pipe body 1121 and the nozzle pipe 1122 in the axial direction of the inner pipe 112 and achieves a certain buffer effect under appropriate circumstances.

The sealing member 60 may be made of an elastic material, for example, may be an elastic sealing ring. Thus, the sealing member 60 can achieve a certain buffer effect and can compensate for a mounting gap between the nozzle pipe 1122 and the inner pipe body 1121, thereby improving the reliability of connection between the nozzle pipe 1122 and the inner pipe body 1121.

As shown in FIG. 3, FIG. 8, and FIG. 10, FIG. 10 is a cross-sectional view of C-C in FIG. 8. In some embodiments, a supporting member 40 is provided in the outer pipe body 1111, where the supporting member 40 is disposed at an end portion of the outer pipe body 1111 and supported between the outer pipe body 1111 and the inner pipe 112.

The outer pipe body 1111 is generally in an elongated shape, and the supporting member 40 is provided at the end portion of the outer pipe body 1111, such that the supporting member 40 provides a radial supporting force for the outer pipe 111, thereby reducing deformation of the outer pipe 111. Thus, the joint between the outer pipe 111 and the inner pipe 112 is firmer, thereby facilitating improvement of reliability of the sprayer 10.

The elongated shape means that an axial size of the outer pipe body 1111 is larger than a radial size of the outer pipe body 1111.

As shown in FIG. 3, in some embodiments, the outer pipe body 1111 and the supporting member 40 may be an integrated structure, thereby not only reducing the number of components of the sprayer 10 but also enhancing the strength of the outer pipe 111.

The integrated structure may be an integrated structure formed by integral formation, welding, or adhesion. When the outer pipe body 1111 and the supporting member 40 are both made of a metal material, they can form an integrated structure by integral formation through casting or by welding. When one of the outer pipe body 1111 and the supporting member 40 is made of a non-metal material, they can form an integrated structure by integral formation through injection molding, adhesion, or the like. This is not specifically limited herein.

As shown in FIG. 10, in some embodiments, the supporting member 40 includes multiple supporting arms 41 arranged in a circumferential direction of the inner pipe 112, and a space for air to pass through is formed between adjacent two of the supporting arms 41.

With the foregoing arrangement, the supporting arm 41 can abut against the outer pipe 111 and the inner pipe 112 along a radial direction when the inner pipe 112 or the outer pipe 111 deforms, so as to provide a radial supporting force for the outer pipe 111 and the inner pipe 112, thereby reducing deformation of the outer pipe 111 and the inner pipe 112 and improving the reliability of the sprayer 10. In addition, the space formed allows air to pass through, thereby achieving the purpose of connecting the inner pipe 112 to the outer pipe 111 as well as delivering the air.

For example, the supporting member 40 includes three supporting arms 41 arranged in the circumferential direction of the inner pipe 112, and a space for air to pass through is formed between adjacent two of the supporting arms 41, such that three spaces for air to pass through are formed in the circumferential direction of the inner pipe 112.

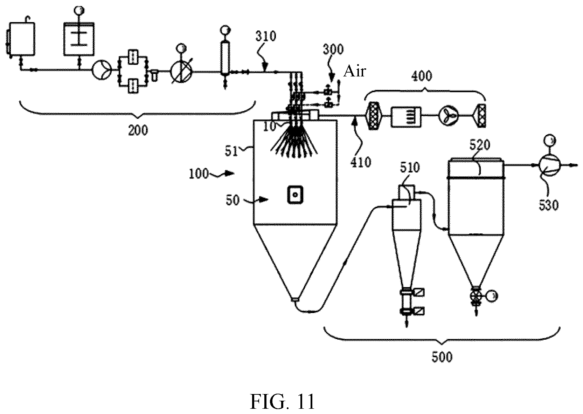

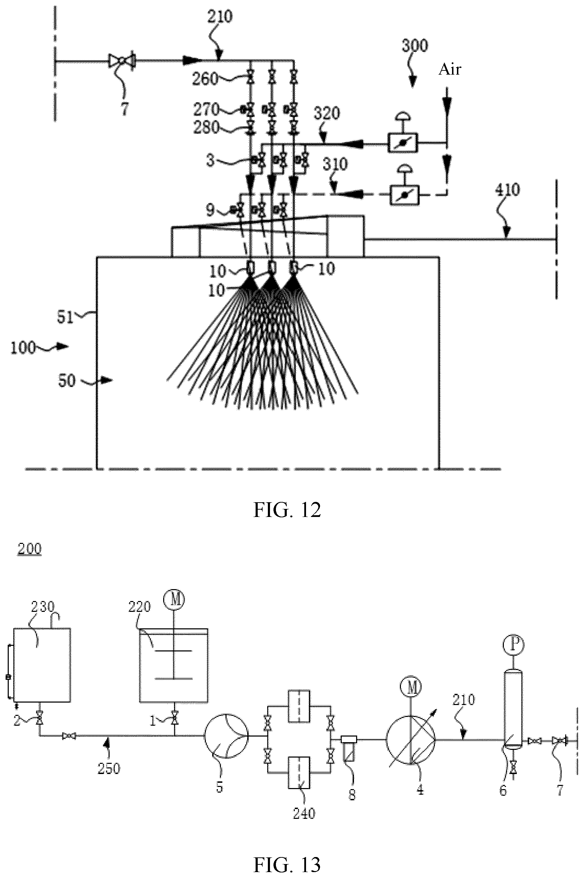

As shown in FIG. 11 and FIG. 12, FIG. 11 is a schematic structural diagram of a spray-drying system according to some embodiments of this application; and FIG. 12 is a schematic diagram of joints of the spray-drying apparatus 100 in FIG. 11 and the material supply system 200, the gas supply system 300, and the drying system 400. An embodiment of this application further provides a spray-drying apparatus 100 including a drying chamber 50 and the sprayer 10 according to the foregoing embodiment, where the sprayer 10 is mounted on a chamber wall 51 of the drying chamber 50.

In the spray-drying apparatus 100 according to this embodiment of this application, since the spray-drying apparatus 100 includes the sprayer 10 according to the foregoing embodiment, the spray-drying apparatus 100 also has the corresponding technical effects of the foregoing sprayer 10, which are not described herein again.

That the sprayer 10 is mounted on the chamber wall 51 of the drying chamber 50 means that the sprayer 10 may be mounted on the chamber wall 51 of the drying chamber 50 through screwing or hooping, such that the liquid material nozzle 13 and the gas nozzle 15 of the sprayer 10 are located in the drying chamber 50. In this way, the liquid material is atomized and dried for one-step formation in the drying chamber 50 after sprayed out of the liquid material nozzle 13, greatly improving the spray granulation efficiency and facilitating mounting and overhauling of the sprayer 10.

The liquid material enters the drying chamber 50 via the liquid material nozzle 13 of the sprayer 10 to start a spray granulation drying process that is specifically divided into three stages: liquid material atomization, mist particle granulation through drying, and granular powder material discharging. The one-step formation means that the foregoing three steps are all operated by one person and implemented using one machine in the drying chamber 50, achieving high efficiency and saving energy.

As shown in FIG. 12, in some embodiments, the chamber wall 51 of the drying chamber 50 includes a top wall and a side wall, where the sprayer 10 is disposed on the top wall of the drying chamber 50.

The sprayer 10 is disposed on the top wall of the drying chamber 50, so that mist droplets sprayed out of the liquid material nozzle 13 of the sprayer 10 drop due to spiral hot air in the drying chamber 50, achieving high utilization of an internal drying space of the drying chamber 50.

In addition to the top wall of the drying chamber 50, the sprayer 10 may also be disposed on the side wall of the drying chamber 50. This is not specifically limited herein.

As shown in FIG. 12, in some embodiments, the sprayer 10 is provided in plurality. For example, three sprayers 10 are provided on the chamber wall 51 of the drying chamber 50.

The provision of the multiple sprayers 10 on the chamber wall 51 of the drying chamber 50 improves the spray granulation efficiency.

Certainly, in addition to three, the number of the sprayer 10 may be another number such as two, four, or five. The sprayers 10 may be uniformly arranged on the top wall of the drying chamber 50, uniformly arranged on the side wall of the drying chamber 50, or randomly arranged on the top wall or side wall. This is not specifically limited herein.

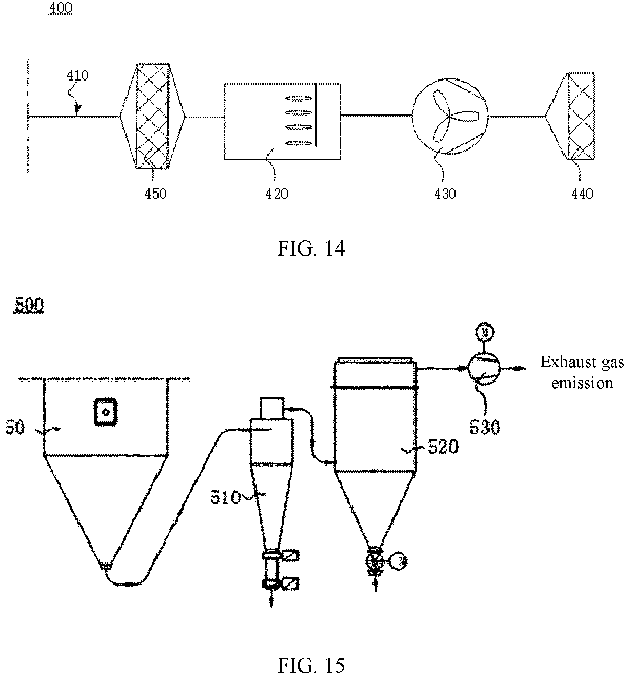

As shown in FIG. 11 to FIG. 15, FIG. 13 is a schematic structural diagram of a material supply system 200 in FIG. 11; FIG. 14 is a schematic structural diagram of a drying system 400 in FIG. 11; and FIG. 15 is a schematic structural diagram of a dust removal system 500 in FIG. 11. An embodiment of this application further provides a spray-drying system including a material supply system 200, a gas supply system 300, and the spray-drying apparatus 100 according to the foregoing embodiments, where the material supply system 200 communicates with the liquid material inlet 12 of the sprayer 10, and the gas supply system 300 communicates with the gas inlet 14 of the sprayer 10.

In the spray-drying system according to this embodiment of this application, since the spray-drying system includes the spray-drying apparatus 100 according to the foregoing embodiments, the spray-drying system also has the corresponding technical effects of the foregoing spray-drying apparatus 100, which are not described herein again.

As shown in FIG. 11 and FIG. 13, in some embodiments, the material supply system 200 includes a material supply line 210, a material storage apparatus 220, and a water storage apparatus 230. One end of the material supply line 210 communicates with the material storage apparatus 220 and the other end communicates with the liquid material inlet 12 of the sprayer 10, the material supply line 210 is provided with a delivery pump and a first control valve 1, and the first control valve 1 is disposed between the delivery pump and the material storage apparatus 220. The water storage apparatus 230 is connected to the material supply line 210 through a water supply line 250, the water supply line 250 being connected between the delivery pump and the first control valve 1, and the water supply line being provided with a second control valve 2.

The material storage apparatus 220 mainly refers to an apparatus for storing a liquid material, and may be a stirring tank.

The water storage apparatus 230 mainly refers to an apparatus for storing water and may be a water storage tank.

The water storage apparatus 230 is provided in the material supply system 200, such that the liquid material and water are delivered via the same material supply line 210. During non-granulation work of the spray-drying apparatus 100, the water supply line 250 communicates with the material supply line 210 of the original material supply system 200, such that the delivery pump delivers water in the water storage apparatus 230 into the liquid material channel 16 of the sprayer 10, and water can flow through the liquid material channel 16 to flush and remove residues such as the liquid material in the liquid material channel 16, thereby guaranteeing cleanness of the liquid material channel 16. The sprayer 10 can be supplied with a material and washed via the same material supply line 210, such that the original material supply system 200 needs to be additionally provided with only the water storage apparatus 230 and the second control valve 2 for controlling switching of lines. Thus, the material supply system 200 can be refitted at a low cost, facilitating market promotion; and in addition, a step of dismounting the sprayer 10 for cleaning is omitted, reducing the labor cost.

As shown in FIG. 11 and FIG. 12, in some embodiments, the gas supply system 300 includes a first gas supply line 310 and a second gas supply line 320, where the first gas supply line 310 communicates with the gas inlet 14, the second gas supply line 320 communicates with the liquid material inlet 12, and the second gas supply line 320 is provided with a third control valve 3.

With the two gas supply lines provided, the third control valve 3 can be controlled to open and close, so as to implement switching between delivery of gas into the liquid material channel 16 of the sprayer 10 to remove residues such as the liquid material and water in the liquid material channel 16, and delivery of the gas into the gas channel 17. In this way, the step of dismounting the sprayer 10 for cleaning is omitted, greatly reducing the labor cost.

It should be noted that the first gas supply line 310 and the second gas supply line 320 may be supplied with air using a same gas source or supplied with air using different gas sources. Typically, the first gas supply line 310 is provided with a fourth control valve 9, and the third control valve 3 and the fourth control valve 9 can be controlled to implement switching between the first gas supply line 310 and the second gas supply line 320; or the fourth control valve 9 can be used to regulate a range of pressure in the first gas supply line 310 to be 0.4 megapascal (MPa) to 1.2 megapascals (MPa), and the third control valve 3 can be used to regulate a range of pressure in the second gas supply line 320 to be 0.3 MPa to 0.6 MPa. Generally, the pressure in the second gas supply line 320 is lower than the pressure in the first gas supply line 310, thereby reducing usage of gas.

As shown in FIG. 13, in some embodiments, the delivery pump includes a plunger pump 4 and a diaphragm pump 5, the diaphragm pump 5 being disposed between the first control valve 1 and the plunger pump 4.

The plunger pump 4 is an important apparatus of a hydraulic system. In the plunger pump 4, a plunger reciprocates in a cylinder body to change a volume of a sealed working accommodating cavity to implement oil suction and oil pumping. The plunger pump 4 has the advantages such as high rated pressure, compact structure, high efficiency, and convenient flow regulation.

The diaphragm pump 5 is configured to separate a delivered liquid from a piston and a pump cylinder by virtue of a diaphragm, thereby protecting the piston and the pump cylinder. The diaphragm pump 5 is a special form of displacement pumps. The diaphragm pump 5 sucks and discharges liquid by changing the volume of a working chamber by virtue of reciprocating expansion of a diaphragm. The displacement pump refers to a pump for delivering liquid by virtue of a volume change in the pump cylinder.

A relatively high pressure is generated via the plunger pump 4. Due to cooperation of the plunger pump 4 and the diaphragm pump 5 in use, the liquid material can be pumped and delivered at a certain pressure into the liquid material channel 16 of the sprayer 10 by the diaphragm pump 5 in the material supply line 210.

As shown in FIG. 13, in some embodiments, the material supply line 210 is further provided with a pulsation damper 6 and/or a back pressure valve 7, the pulsation damper 6 being disposed at an outlet side of the plunger pump 4, and the back pressure valve 7 being disposed at the outlet side of the plunger pump 4. For example, the material supply line 210 is further provided with a pulsation damper 6 and/or a back pressure valve 7, the pulsation damper 6 being disposed at an outlet side of the plunger pump 4, and the back pressure valve 7 being disposed at the outlet side of the plunger pump 4.

The back pressure valve 7 is generally provided at an outlet pipeline, for example, provided at a joint between the material supply line 210 and the sprayer 10, to maintain a constant pressure at an outlet of the pump. At the outlet of the plunger pump 4, autonomous flowing or siphoning usually occurs due to gravity or other effects. The back pressure valve 7 being provided at the outlet side of the plunger pump 4 can reduce flow and pressure fluctuations generated in siphoning, thereby helping to maintain pressure stabilization of the material supply line 210.

The pulsation damper 6 is a pressure vessel configured to eliminate pressure fluctuation or flow fluctuation of a liquid in the pipeline, with the functions of stabilizing the pressure and flow of a fluid, eliminating vibration of the pipeline, protecting downstream instruments and devices, improving the volumetric efficiency of the pump, and the like.

A pressure at the outlet of the plunger pump 4 can be regulated via the back pressure valve 7, such that a constant pressure is kept in the material supply line 210; and the pulsation damper 6 is provided to cooperate with the back pressure valve 7 in use, not only reducing flow outputted by the plunger pump 4 or influence on the pressure due to pulsation of the pressure, but also alleviating impact caused by flowing of the liquid material.

Certainly, the material supply line 210 may alternatively be provided with only the pulsation damper 6 or the back pressure valve 7. This is not specifically limited herein.

As shown in FIG. 12, in some embodiments, the material supply line 210 is further provided with a manual valve 260, a pressure regulation valve 270, and a one-way valve 280.

The manual valve 260 is configured to manually control on and off of the material supply line 210, mainly for overhauling.

The pressure regulation valve 270 is driven, by receiving a signal of an industrial automation control system, to change a section area between a valve core and a valve seat, so as to control technological parameters such as flow, temperature, and pressure of a medium in the pipeline, mainly for automatically regulating the pressure in the material supply line 210.

By virtue of the one-way valve 280, a fluid (for example, a liquid material and water) can only flow in a single direction from an inlet to an outlet and cannot flow back, and the one-way valve 280 is mainly for preventing the fluid in the material supply line 210 from flowing back.

As shown in FIG. 13, in some embodiments, an iron remover 8 and/or a first filter 240 is provided on the material supply line 210 between the plunger pump 4 and the diaphragm pump 5. For example, an iron remover 8 and/or a first filter 240 is provided on the material supply line 210 between the plunger pump 4 and the diaphragm pump 5.

The iron remover 8 is a device capable of generating a strong magnetic field attraction force and can remove iron magnetic impurities mixed in a material, so as to guarantee safe and normal work of mechanical devices such as a crusher and a grinder in a delivery system, effectively reduce the possibility of occurrence of accidents caused by impurities, and improve the quality and purity of a liquid material.

The first filter 240 is an indispensable apparatus on a medium delivery pipeline (herein referred to as the material supply line 210 of the material supply system 200). The first filter 240 is generally mounted on a pressure reducing valve, a pressure relief valve, a level control valve, and inlet end devices of other devices, mainly for filtering particle impurities in water or a liquid material.

The iron remover 8 and the first filter 240 are provided on the material supply line 210 between the plunger pump 4 and the diaphragm pump 5, such that the impurities in the liquid material, especially metal impurities, can be filtered, thereby not only increasing the purity of the liquid material but also reducing the possibility of accidents of devices such as the plunger pump 4 or the sprayer 10 caused by the impurities, especially metal impurities in the liquid material.

Certainly, it is also possible that only the iron remover 8 or the first filter 240 is provided on the material supply line 210 between the plunger pump 4 and the diaphragm pump 5. This is not specifically limited herein.

As shown in FIG. 12, in some embodiments, an amount ratio of gas supplied from the first gas supply line 310 to the sprayer 10 to a material supplied from the material supply line 210 to the sprayer 10 ranges from 1 to 15.

The amount ratio of the gas supplied from the first gas supply line 310 to the sprayer 10 to the material supplied from the material supply line 210 to the sprayer 10 means that 1 to 15 cubic meters of air is consumed per liter of liquid material.

The amount ratio of the gas supplied to the material supplied is a key parameter for spray granulation of the sprayer 10. When the ratio is excessively small, that is, less than 1 cubic meter of supplied air is consumed per liter of liquid material, the liquid material cannot be fully cut, resulting in unqualified particle size; and when the ratio is excessively large, that is, more than 15 cubic meters of supplied air is consumed per liter of liquid material, the particle size can meet the requirements but cause waste of air. The amount ratio of the gas supplied to the material supplied is designed within the foregoing range, so that the liquid material can be fully cut and achieve a qualified particle size without wasting air, thereby guaranteeing both the size of the granular material and less gas use.

In some embodiments, a pressure ratio of the first gas supply line 310 to the material supply line 210 is 0.6:3.5.

The pressure of the first gas supply line 310 ranges from 0.1 MPa to 1.5 MPa, and the pressure of the material supply line 210 ranges from 0.1 MPa to 5.0 MPa. That the pressure ratio of the first gas supply line 310 to the material supply line 210 is 0.6:3.5 refers to a pressure ratio of the first gas supply line 310 to the material supply line 210 when the pressure of the first gas supply line 310 is 0.6 MPa and the pressure of the material supply line 210 is 3.5 MPa. The pressure of the first gas supply line 310 and the pressure of the material supply line 210 are key parameters for spray granulation of the sprayer 10. It is a difficulty to reasonably set the pressure of the first gas supply line 310 and the pressure of the material supply line 210 and find a balance of a pressure ratio of the first gas supply line 310 to the material supply line 210 for spray granulation.

The pressure ratio of the first gas supply line 310 to the material supply line 210 is designed to be 0.6:3.5, such that a particle size obtained after treatment in the sprayer 10 of the spray-drying apparatus 100 reaches a technical target of D50=3 micrometers (um)-10 micrometers (um) as well as comprehensive indexes that D50 < 8 um and D90 ≤ 25 um; the particle size meets requirements and is uniform; and in addition, less gas is used, thereby guaranteeing both the size of the granular material and less gas use.

As shown in FIG. 11 and FIG. 13, in some embodiments, the spray-drying system further includes a drying system 400, the drying system 400 including an air supply line 410, a heater 420, a first fan 430, and a second filter 440, where one end of the air supply line 410 is connected to the second filter 440 and the other end communicates with the drying chamber 50, and the first fan 430 and the heater 420 are disposed on the air supply line 410.

The heater 420 is mainly for heating air.

The second filter 440 is mainly for filtering impurities in air.

The first fan 430 is an air supply fan for delivering air into the drying chamber 50 via the air supply line 410.

The drying chamber 50 communicates with the drying system 400. In this way, after the liquid material is delivered into the drying chamber 50 via the sprayer 10, the drying system 400 delivers hot air into the drying chamber 50 for drying mist droplets, such that the liquid material forms a granular material through one-step formation in the drying chamber 50.

As shown in FIG. 11 and FIG. 13, in some embodiments, the air supply line 410 is further provided with a third filter 450, the third filter 450 being disposed at an air outlet side of the heater 420.

After the air is heated in the heater 420, a metal oxide is easily formed on the inner wall of the heater 420. Therefore, the third filter 450 is disposed at the air outlet side of the heater 420, so that impurities in hot air, especially metal oxide impurities formed in the heater 420 can be filtered before the hot air enters the sprayer 10, reducing the risk of a short circuit of the sprayer 10 caused by the metal oxide impurities entering the sprayer 10, thereby improving the reliability of the spray-drying apparatus 100.

As shown in FIG. 11 and FIG. 13, in some embodiments, the second filter 440 is a primary filter or a medium-efficiency filter, and the third filter 450 is a high-efficiency filter.

The primary filter is mainly configured to filter dust particles with a size of 5 um or larger. The primary filter includes a plate form, a foldable form, and a bag form. An outer frame may be a paper frame, an aluminum frame, or a zinc-plated iron frame. A filter material may be a non-woven fabric, a nylon net, an active carbon filter material, a metal mesh, or the like. A protective screen may be a double-sided plastic-sprayed iron mesh and a double-sided zinc-plated iron mesh.

The medium-efficiency filter is mainly configured to capture particulate dust with a size of 1 um to 5 um and various suspended substances, with filtration efficiency of 60% to 95%. The medium-efficiency filter may be used for previous filtration for the high-efficiency filter, so as to reduce the workload of the high-efficiency filter and prolong the service life of the high-efficiency filter.

The high-efficiency filter is mainly configured to capture particulate dust with a size of 0.5 um or larger and various suspended substances, as final filtration of various filter systems. The high-efficiency filter is formed in a manner that ultrafine glass fiber paper is used as a filter material, materials such as adhesive board paper and aluminum foil plate are folded as cutting plates, a novel polyurethane sealant is used for sealing, and a zinc-plated plate, a stainless steel plate, and an aluminum alloy profile are used as an outer frame.

In the spray-drying system according to this embodiment of this application, the air is primarily filtered before entering the heater 420 so as to remove impurities in the air, and is then filtered twice after passing through the heater 420. After the air is heated in the heater 420, a metal oxide is easily formed on the inner wall of the heater 420. Therefore, a high-efficiency filter is used as the third filter 450 for implementing comprehensive filtration before hot air enters the sprayer 10 so as to filter the impurities in the hot air, especially metal oxide impurities formed in the heater 420, reducing the risk of a short circuit of the sprayer 10 caused by the metal oxide impurities entering the sprayer 10, thereby improving the reliability of the spray-drying apparatus 100.

As shown in FIG. 11 and FIG. 15, in some embodiments, the material supply system 200 further includes a dust removal system 500 connected to the spray-drying apparatus 100, where the dust removal system 500 includes a cyclone separator 510, a bag dust collector 520, and a second fan 530.

The cyclone separator 510 is a device for separation of gas and solid systems or separation of liquid and solid systems. The working principle is that based on the rotational motion caused by tangential introduction of gas flow, solid particles or liquid droplets with a relatively large inertial centrifugal force are thrown toward an outer wall surface and separated.

The bag dust collector 520 is also referred to as a bag filter, which is a dry dust filter apparatus. The bag dust collector 520 is configured to capture tiny, dry, and non-fiber dust. A filter bag of the bag dust collector 520 is made of woven filter cloth or a non-woven felt, and dust-containing gas is filtered through filtration of fiber fabrics. After the dust-containing gas enters the bag dust collector, the dust with a large particle size and weight deposits under the action of the gravity and falls into a dust hopper. When gas containing tiny dust passes through the filter material, dust is retained, such that the gas is purified.

The second fan 530 is an exhaust fan mainly configured to suck a fine granular material together with dry air in the drying chamber 50 into a device outside the drying chamber 50, and the second fan 530 may be a centrifugal fan.

The fine granular material in the drying chamber 50, together with the dry air, is delivered into cyclone separator 510. After effectively separated by the cyclone separator 510, the fine granular material enters a collection cylinder at the bottom of the separator for recycling, and the remaining waste gas containing an extremely small amount of fine granular material is sucked into the dust collector by the second fan 530 and collected again, so that the waste gas subjected to harmless treatment is discharged via a chimney, thereby reducing the pollution to the environment.

An embodiment of this application further provides a control method for spray-drying system. The control method includes: after a liquid material is dried and granulated in a spray-drying apparatus 100, closing a first control valve 1 and opening a second control valve 2 such that a delivery pump delivers water in a water storage apparatus 230 to a liquid material channel 16 of a sprayer 10 via a material supply line 210; and turning off the delivery pump after a preset time.

After the liquid material is dried and granulated in the spray-drying apparatus 100, with use of the foregoing steps, during non-granulation work of the spray-drying apparatus 100, the delivery pump delivers the water in the water storage apparatus 230 into the liquid material channel 16 of the sprayer 10 via the material supply line 210 of the original material supply system 200, the water flows through the liquid material channel 16 to flush and remove residues such as the liquid material in the liquid material channel 16, thereby guaranteeing cleanness of the liquid material channel 16. In this way, the original material supply system 200 needs to be additionally provided with only the water storage apparatus 230 and the second control valve 2 for controlling switching of the material supply line 210, so that the material supply system 200 can be refitted with a low cost, and in addition, a step of dismounting the sprayer 10 for cleaning is omitted, reducing the labor cost.

In some embodiments, after the turning off the delivery pump, the control method further includes: opening the third control valve 3 such that gas in the second gas supply line 320 enters the liquid material channel 16 of the sprayer 10.

With the foregoing step added after the step of turning off the delivery pump, during non-granulation work of the spray-drying apparatus 100, gas can be delivered into the liquid material channel 16 via the sprayer 10, and the gas can remove the residues such as the liquid material and water in the liquid material channel 16, such that the liquid material channel 16 of the sprayer 10 is kept clean and dry. In this way, the liquid material channel 16 is kept clean and dry while the step of dismounting the sprayer 10 for cleaning is omitted, thereby helping to prolong the service life of the sprayer 10.

As shown in FIG. 1 to FIG. 5, in an embodiment, the sprayer 10 includes a sprayer body 11. The sprayer body 11 is provided with a liquid material inlet 12, a liquid material nozzle 13, a gas inlet 14, a gas nozzle 15, a liquid material channel 16, and a gas channel 17, where the liquid material nozzle 13 and the liquid material inlet 12 both communicate with the liquid material channel 16, the gas nozzle 15 and the gas inlet 14 both communicate with the gas channel 17, and the gas nozzle 15 is provided at the liquid material nozzle 13; and a dispersing member 20 is provided in the liquid material channel 16, the dispersing member 20 is in clearance fit with an inner wall of the liquid material channel 16, the dispersing member 20 is disposed at the liquid material nozzle 13, and the dispersing member 20 divides the liquid material channel 16 into multiple sub-channels communicating with the liquid material nozzle 13.

In the sprayer 10 according to this embodiment of this application, the liquid material nozzle 13 and the liquid material inlet 12 both communicate with the liquid material channel 16, the gas nozzle 15 and the gas inlet 14 both communicate with the gas channel 17, the gas nozzle 15 is provided at the liquid material nozzle 13, and the dispersing member 20 is provided in the liquid material channel 16. In this way, a liquid material is firstly dispersed in the liquid material channel 16 by the dispersing member 20, and then the liquid material sprayed out of the liquid material nozzle 13 and gas sprayed out of the gas nozzle 15 are shear-mixed at the liquid material nozzle 13, such that the liquid material is physically fragmented and atomized by the gas to form micro mist droplets. The micro mist droplet forms a spherical shape under the action of surface tension; and in addition, due to a quite large surface area of the mist droplet, moisture is quickly evaporated and dried under the action of hot gas flow, finally resulting in a dry spherical granular powder material with a small diameter through shrinkage.

As shown in FIG. 3 to FIG. 5, the dispersing member 20 includes a prismatic segment 21 and an abutting column segment 22. The abutting column segment 22 is located on one side of the prismatic segment 21 toward the nozzle member 30; a side wall of the abutting column segment 22 is provided with two communicating grooves 23 that are oblique to an axial direction of the abutting column segment 22; and each communicating groove 23 communicates with the spray orifice 31 and at least one of the sub-channels. The prismatic segment 21 includes a first prismatic segment 211 and a second prismatic segment 212 connected to each other, where a cross section of the first prismatic segment 211 has a larger circumcircle radius than a cross section of the second prismatic segment 212, and the first prismatic segment 211 is located on a side of the second prismatic segment 212 facing toward the liquid material nozzle 13.

As shown in FIG. 3, the spray orifice 31 includes a taper hole segment 311 and a column hole segment 312, where the column hole segment 312 is connected to a small-opening end 3111 of the taper hole segment 311, and a large-opening end 3112 of the taper hole segment 311 is capable of allowing the abutting column segment 22 to extend into; and an end of the communicating groove 23 runs through an end of the abutting column segment 22 facing toward the nozzle member 30 and communicates with the taper hole segment 311.

As shown in FIG. 3, FIG. 6, and FIG. 7, the nozzle member 30 is provided at the liquid material nozzle 13, the nozzle member 30 is in interference fit with the liquid material channel 16, the nozzle member 30 is located on a side of the dispersing member 20 facing toward the liquid material nozzle 13, and a periphery of the nozzle member 30 is hermetically connected to the inner wall of the liquid material channel 16; and the nozzle member 30 is provided with the spray orifice 31, and the spray orifice 31 communicates with each of the sub-channels.

As shown in FIG. 3, an annular flange provided at one end of the liquid material channel 16 forms the limiting portion 32, the limiting portion 32 is configured to prevent the nozzle member 30 from moving out of the liquid material nozzle 13, a diameter of a center hole of the annular flange is smaller than a maximum diameter of the nozzle member 30, and the center hole of the annular flange is the liquid material nozzle 13.

As shown in FIG. 3, the sprayer body 11 includes an outer pipe 111 and an inner pipe 112 running through the outer pipe 111. The outer pipe 111 includes an outer pipe body 1111 and an accommodating pipe 1112, where one end of the accommodating pipe 1112 is detachably connected to the outer pipe body 1111, the other end of the accommodating pipe 1112 is provided with a mounting hole 1110, the first end 1131 of the sleeve 113 adaptively extends into the mounting hole 1110, and the second end 1132 of the sleeve 113 extends into the accommodating pipe 1112. The inner pipe 112 includes an inner pipe body 1121 and a nozzle pipe 1122 detachably connected to the inner pipe body 1121, where the nozzle pipe 1122 is disposed in the accommodating pipe 1112, a pipe opening of the nozzle pipe 1122 away from the inner pipe body 1121 is the liquid material nozzle 13, and the sleeve 113 sleeves the nozzle pipe 1122, such that the gas nozzle 15 is disposed around the liquid material nozzle 13. The sleeve 113 is located at one end of the inner pipe 112 where the liquid material nozzle 13 is provided, the first end 1131 of the sleeve 113 is hermetically connected to the outer pipe 111, and the second end 1132 of the sleeve 113 extends into the outer pipe 111 and is hermetically connected to the inner pipe 112. The sleeve 113 has an opening-shrinking pipe chamber 114, and the gas nozzle 15 is located at the small-opening end of the pipe chamber 114, such that the gas nozzle 15 is located at the first end 1131 of the sleeve 113 and formed between the sleeve 113 and the inner pipe 112. Multiple gas holes 1130 are provided on a circumferential wall of the sleeve 113 in a circumferential direction, and the multiple gas holes 1130 all communicate with the liquid material channel 16 and the gas channel 17.

As shown in FIG. 3, a circumferential wall of the inner pipe 112 is provided with an annular connecting flange 115, the connecting flange 115 including a fitting portion 1151 and a stop portion 1152 arranged in an axial direction of the inner pipe 112, where the stop portion 1152 has a larger diameter than the fitting portion 1151, the fitting portion 1151 adaptively extends into a pipe opening of the sleeve 113 at the second end 1132, and the stop portion 1152 stops at an edge of the pipe opening of the sleeve 113 at the second end 1132. A sealing member 60 is provided at a joint between the inner pipe body 1121 and the nozzle pipe 1122 in the axial direction of the inner pipe 112, where the sealing member 60 is provided with a through hole 61 for the liquid material channel 16 to pass through.

As shown in FIG. 9, adj acent two of the gas holes 1130 have a same distance, each of the gas holes 1130 is an inclined hole, and the hole axis of the gas hole 1130 and the central axis of the sleeve 113 are non-uniplanar straight lines with respect to each other. In the circumferential direction of the sleeve 113, all the gas holes 1130 have a same inclination direction, and an inclination angle of the hole axis of the gas hole 1130 with respect to the central axis of the sleeve 113 ranges from 15° to 60°. The gas hole 1130 corresponding to the central axis indicated by the dotted line M in the plane shown in FIG. 9 is used as an example. One end of the central axis of the gas hole 1130 close to the central axis of the sleeve 113 is deviated toward a side with respect to the other end away from the central axis of the sleeve 113 (such as the central point of the sleeve 113 in FIG. 9); and the same inclination direction means that the central axes of all of the multiple gas holes 1130 are deviated toward the same side. The inclination angle of the gas hole 1130 refers to an inclination angle of the hole axis of the gas hole 1130 with respect to the central axis of the sleeve 113. That is, the inclination angle is an acute angle between the hole axis of the gas hole 1130 (the dotted line M in the plane shown in FIG. 9) and a first normal (dotted line N in the plane shown in FIG. 9), where the first normal refers to a normal at a position where a cylindrical surface on which a peripheral surface of the sleeve 113 is located is intersected with the hole axis of the gas hole 1130.

As shown in FIG. 3, FIG. 8, and FIG. 10, the outer pipe body 1111 is integrally connected to a supporting member 40. The supporting member 40 is disposed at an end portion of the outer pipe body 1111 and supported between the outer pipe body 1111 and the inner pipe 112. The supporting member 40 includes three supporting arms 41 arranged in a circumferential direction of the inner pipe 112, and a space for air to pass through is formed between adjacent two of the supporting arms 41.

In conclusion, it should be noted that the foregoing embodiments are merely intended to describe the technical solutions of this application rather than to limit this application. Although this application has been described in detail with reference to the foregoing embodiments, persons of ordinary skill in the art should understand that they can still make modifications to the technical solutions described in the embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A sprayer (10), comprising a sprayer body (11), the sprayer body (11) being provided with a liquid material inlet (12), a liquid material nozzle (13), a gas inlet (14), a gas nozzle (15), a liquid material channel (16), and a gas channel (17), wherein the liquid material nozzle (13) and the liquid material inlet (12) both communicate with the liquid material channel (16), the gas nozzle (15) and the gas inlet (14) both communicate with the gas channel (17), and the gas nozzle (15) is provided at the liquid material nozzle (13); and a dispersing member (20) is provided in the liquid material channel (16), the dispersing member (20) is disposed at the liquid material nozzle (13), and the dispersing member (20) divides the liquid material channel (16) into multiple sub-channels (160) communicating with the liquid material nozzle (13).

2. The sprayer (10) according to claim 1, wherein the multiple sub-channels (160) are formed between an outer surface of the dispersing member (20) and an inner wall of the liquid material channel (16).

3. The sprayer (10) according to claim 2, wherein the dispersing member (20) comprises a prismatic segment (21), and the sub-channel (160) is formed between each side wall of the prismatic segment (21) and the inner wall of the liquid material channel (16).

4. The sprayer (10) according to claim 3, wherein the prismatic segment (21) comprises a first prismatic segment (211) and a second prismatic segment (212) connected to each other, wherein a cross section of the first prismatic segment (211) has a larger circumcircle radius than a cross section of the second prismatic segment (212), and the first prismatic segment (211) is located on a side of the second prismatic segment (212) facing toward the liquid material nozzle (13).

5. The sprayer (10) according to claim 4, wherein a nozzle member (30) is provided at the liquid material nozzle (13), the nozzle member (30) is located on a side of the dispersing member (20) facing toward the liquid material nozzle (13), and a periphery of the nozzle member (30) is hermetically connected to the inner wall of the liquid material channel (16); and the nozzle member (30) is provided with a spray orifice (31), and the spray orifice (31) communicates with each of the sub-channels (160).

6. The sprayer (10) according to claim 5, wherein the dispersing member (20) is in clearance fit with the inner wall of the liquid material channel (16), and the dispersing member (20) comprises an abutting column segment (22), wherein the abutting column segment (22) is located on a side of the prismatic segment (21) facing toward the nozzle member (30), a side wall of the abutting column segment (22) is provided with multiple communicating grooves (23), and each of the communicating grooves (23) communicates with the spray orifice (31) and at least one of the sub-channels (160).

7. The sprayer (10) according to claim 6, wherein the communicating groove (23) is oblique to an axial direction of the abutting column segment (22).

8. The sprayer (10) according to claim 7, wherein the spray orifice (31) comprises a taper hole segment (311) and a column hole segment (312), wherein the column hole segment (312) is connected to a small-opening end (3111) of the taper hole segment (311), and a large-opening end (3112) of the taper hole segment (311) is capable of allowing the abutting column segment (22) to extend into; and an end of the communicating groove (23) runs through an end of the abutting column segment (22) facing toward the nozzle member (30) and communicates with the taper hole segment (311).

9. The sprayer (10) according to claim 8, wherein the nozzle member (30) is in interference fit with the liquid material channel (16).

10. The sprayer (10) according to claim 9, wherein a limiting portion (32) is provided on a side of the nozzle member (30) away from the dispersing member (20), the limiting portion (32) being configured to prevent the nozzle member (30) from moving out of the liquid material nozzle (13).

11. The sprayer (10) according to claim 10, wherein the limiting portion (32) is an annular flange provided at one end of the liquid material channel (16), a diameter of a center hole of the annular flange is smaller than a maximum diameter of the nozzle member (30), and the center hole of the annular flange is the liquid material nozzle (13).

12. The sprayer (10) according to any one of claims 1 to 11, wherein the sprayer body (11) comprises an outer pipe (111) and an inner pipe (112) running through the outer pipe (111), a pipe chamber (114) of the inner pipe (112) is the liquid material channel (16), and space between the inner pipe (112) and the outer pipe (111) is the gas channel (17); and the liquid material nozzle (13) is a pipe opening of the inner pipe (112) at one end, the liquid material nozzle (13) is located at a pipe opening of the outer pipe (111) at one end, and the gas nozzle (15) is disposed around the liquid material nozzle (13).

13. The sprayer (10) according to claim 12, wherein the inner pipe (112) is externally sleeved with a sleeve (113), the sleeve (113) is located at the end of the inner pipe (112) where the liquid material nozzle (13) is provided, a first end (1131) of the sleeve (113) is hermetically connected to the outer pipe (111), a second end (1132) of the sleeve (113) extends into the outer pipe (111) and is hermetically connected to the inner pipe (112), and the gas nozzle (15) is located at the first end (1131) of the sleeve (113) and formed between the sleeve (113) and the inner pipe (112); and multiple gas holes (1130) are provided on a circumferential wall of the sleeve (113) in a circumferential direction, and the multiple gas holes (1130) all communicate with the gas nozzle (15) and the gas channel (17).

14. The sprayer (10) according to claim 13, wherein each of the gas holes (1130) is an inclined hole, a hole axis of the gas hole (1130) and a central axis of the sleeve (113) are non-uniplanar straight lines with respect to each other, and the multiple gas holes (1130) are spaced apart in the circumferential direction of the sleeve (113).

15. The sprayer (10) according to claim 14, wherein an inclination angle of the hole axis of the gas hole (1130) with respect to the central axis of the sleeve (113) ranges from 15° to 60°.

16. The sprayer (10) according to claim 15, wherein adjacent two of the gas holes (1130) have a same distance.

17. The sprayer (10) according to claim 16, wherein the sleeve (113) has an opening-shrinking pipe chamber (114), and the gas nozzle (15) is located at the small-opening end (3111) of the pipe chamber (114).

18. The sprayer (10) according to claim 17, wherein the outer pipe (111) comprises an outer pipe (111) body and an accommodating pipe (1112), wherein one end of the accommodating pipe (1112) is detachably connected to the outer pipe (111) body, the other end of the accommodating pipe (1112) is provided with a mounting hole (1110), the first end (1131) of the sleeve (113) adaptively extends into the mounting hole (1110), and the second end (1132) of the sleeve (113) extends into the accommodating pipe (1112).

19. The sprayer (10) according to claim 18, wherein the inner pipe (112) comprises an inner pipe (112) body and a nozzle pipe (1122) detachably connected to the inner pipe (112) body, wherein the nozzle pipe (1122) is disposed in the accommodating pipe (1112), a pipe opening of the nozzle pipe (1122) away from the inner pipe (112) body is the liquid material nozzle (13), and the sleeve (113) sleeves the nozzle pipe (1122).

20. The sprayer (10) according to claim 19, wherein a circumferential wall of the inner pipe (112) is provided with an annular connecting flange (115), the connecting flange (115) comprising a fitting portion (1151) and a stop portion (1152) arranged in an axial direction of the inner pipe (112), wherein the stop portion (1152) has a larger diameter than the fitting portion (1151), the fitting portion (1151) adaptively extends into a pipe opening of the sleeve (113) at the second end (1132), and the stop portion (1152) stops at an edge of the pipe opening of the sleeve (113) at the second end (1132).

21. The sprayer (10) according to claim 20, wherein a supporting member (40) is provided in the outer pipe (111) body, the supporting member (40) being disposed at an end portion of the outer pipe (111) body and supported between the outer pipe (111) body and the inner pipe (112).

22. The sprayer (10) according to claim 21, wherein the supporting member (40) comprises multiple supporting arms (41) arranged in a circumferential direction of the inner pipe (112), and a space for air to pass through is formed between adjacent two of the supporting arms (41).

23. A spray-drying apparatus (100), comprising a drying chamber (50) and the sprayer (10) according to any one of claims 1 to 22, wherein the sprayer (10) is mounted on a chamber wall (51) of the drying chamber (50).

24. A spray-drying system (400), comprising a material supply system (200), a gas supply system (300), and the spray-drying apparatus (100) according to claim 23, wherein the material supply system (200) communicates with the liquid material inlet (12) of the sprayer (10), and the gas supply system (300) communicates with the gas inlet (14) of the sprayer (10).

25. The spray-drying system (400) according to claim 24, wherein the material supply system (200) comprises a material supply line (210), a material storage apparatus (220), and a water storage apparatus (230); wherein
one end of the material supply line (210) communicates with the material storage apparatus (220) and the other end communicates with the liquid material inlet (12) of the sprayer (10), the material supply line (210) is provided with a delivery pump and a first control valve (1), and the first control valve (1) is disposed between the delivery pump and the material storage apparatus (220); and
the water storage apparatus (230) is connected to the material supply line (210) through a water supply line (250), the water supply line (250) being connected between the delivery pump and the first control valve (1), and the water supply line (250) being provided with a second control valve (2).

26. The spray-drying system (400) according to claim 25, wherein the gas supply system (300) comprises a first gas supply line (310) and a second gas supply line (320), wherein the first gas supply line (310) communicates with the gas inlet (14), the second gas supply line (320) communicates with the liquid material inlet (12), and the second gas supply line (320) is provided with a third control valve (3).

27. The spray-drying system (400) according to claim 26, wherein the delivery pump comprises a plunger pump (4) and a diaphragm pump (5), the diaphragm pump (5) being disposed between the first control valve (1) and the plunger pump (4).

28. The spray-drying system (400) according to claim 27, wherein the material supply line (210) is further provided with a pulsation damper (6) and/or a back pressure valve (7), the pulsation damper (6) being disposed at an outlet side of the plunger pump (4), and the back pressure valve (7) being disposed at the outlet side of the plunger pump (4).

29. The spray-drying system (400) according to claim 28, wherein an iron remover (8) and/or a first filter (240) is provided on the material supply line (210) between the plunger pump (4) and the diaphragm pump (5).

30. The spray-drying system (400) according to claim 29, wherein an amount ratio of gas supplied from the first gas supply line (310) to the sprayer (10) to a material supplied from the material supply line (210) to the sprayer (10) ranges from 1 to 15.

31. The spray-drying system (400) according to claim 30, wherein a pressure ratio of the first gas supply line (310) to the material supply line (210) is 0.6:3.5.

32. The spray-drying system (400) according to claim 31, wherein the spray-drying system (400) further comprises a drying system (400), the drying system (400) comprising an air supply line (410), a heater (420), a first fan (430), and a second filter (440), wherein one end of the air supply line (410) is connected to the second filter (440) and the other end communicates with the drying chamber (50), and the first fan (430) and the heater (420) are disposed on the air supply line (410).

33. The spray-drying system (400) according to claim 32, wherein the air supply line (410) is further provided with a third filter (450), the third filter (450) being disposed at an air outlet side of the heater (420).

34. The spray-drying system (400) according to claim 33, wherein the second filter (440) is a primary filter or a medium-efficiency filter, and the third filter (450) is a high-efficiency filter.

35. A control method for the spray-drying system (400) according to any one of claims 26 to 32, comprising: after a liquid material is dried and granulated in the spray-drying apparatus (100), closing the first control valve (1) and opening the second control valve (2) such that the delivery pump delivers water in the water storage apparatus (230) to the liquid material channel (16) of the sprayer (10) via the material supply line (210); and turning off the delivery pump after a preset time.

36. The control method for the spray-drying system (400) according to claim 35, wherein after the turning off the delivery pump, the control method further comprises:
opening the third control valve (3) such that gas in the second gas supply line (320) enters the liquid material channel (16) of the sprayer (10).
